# EUROPÄISCHE PATENTANMELDUNG

(11) **EP 2 552 003 A1**
(43) Veröffentlichungstag der Anmeldung: **30.01.2013**
(21) Anmeldenummer: 11175353.9
(22) Anmeldetag: 26.07.2011
(51) Int. Cl.: H02M 5/458

(54) **Schaltnetzteil und Verfahren zum Betreiben eines an einen Zwischenkreis angeschlossenen Schaltnetzteils**

(71) Anmelder: SIEMENS AKTIENGESELLSCHAFT, 80333 München (DE)
(72) Erfinder: Portisch, Daniel, 2130 Mistelbach (AT); Drescher, Hans, 1210 Wien (AT)

(57) **Zusammenfassung**

Die Erfindung betrifft ein Schaltnetzteil (9), welches eine Steuerung zur Ansteuerung eines Schaltelements umfasst und an einen Zwischenkreis eines Umrichters angeschlossen ist. Dabei weist das Schaltnetzteil (9) ein Startup-Delay auf, sodass die Ansteuerung des Schaltelements blockiert ist, bis eine vorgegebene Startverzögerungsdauer (T) abgelaufen ist. Die Startverzögerungsdauer (T) ist dabei länger als die Zeitspanne zur Zwischenkreisladung.

## Beschreibung

Die Erfindung betrifft ein Schaltnetzteil, welches eine Steuerung zur Ansteuerung eines Schaltelements umfasst und an einen Zwischenkreis eines Umrichters angeschlossen ist. Zudem betrifft die Erfindung Verfahren zum Betreiben des Schaltnetzteils.

Umrichter werden genutzt, um Lasten wie beispielsweise drehzahlregelbare Maschinen an ein Drehstromnetz anzuschalten. Dabei liegt ein Zwischenkreis über einen Gleichrichter an dem Drehstromnetz an und aus dem Zwischenkreis wird über eine entsprechende Brückenschaltung die Last angesteuert. Es ist üblich, dass die Zwischenkreisspannung über einen Widerstand, insbesondere über einen PTC-Widerstand, und ein Hilfsschütz hochgeladen wird. Bei z.B. 95% der Ladung wird diese aus Widerstand und Hilfsschütz bestehende Vorschaltung mittels eines Hauptschützes überbrückt.

Regelmäßig wird das Hochladen des Zwischenkreises mit einer Überwachungsschaltung kontrolliert, um das Auftreten eines Spannungseinbruchs festzustellen. Ein solcher Spannungseinbruch kommt beispielsweise vor, wenn eine Last ab einer bestimmten Spannung fehlerhafterweise kurzschließt. Deshalb schaltet die Umrichtersteuerung in einen Störungsmodus, sobald ein Spannungseinbruch erkannt wird.

Stromversorgungen, welche an einen solchen Zwischenkreis eines Umrichters angeschlossen sind, müssen diese Gegebenheiten berücksichtigen. Nach dem Stand der Technik umfasst eine gegenständliche Anordnung eine Meldeeinrichtung, um der Stromversorgung zu signalisieren, dass ein Zwischenkreisladevorgang abgeschlossen bzw. weitgehend abgeschlossen ist. Erst dann schaltet die Stromversorgung ein und es wird vermieden, dass die Überwachungsschaltung das Einschalten der Stromversorgung als fehlerhaften Spannungseinbruch erkennt. Nachteilig ist dabei jedoch der zusätzliche Verkabelungsaufwand und die Eingangsleitungen müssen gegen Störungen entsprechend geschützt werden.

Der Erfindung liegt die Aufgabe zugrunde, für ein Schaltnetzteil der eingangs genannten Art eine Verbesserung gegenüber dem Stand der Technik anzugeben. Zudem soll ein Verfahren zum Betreiben des Schaltnetzteils angegeben werden.

Erfindungsgemäß wird diese Aufgabe gelöst durch die unabhängigen Ansprüche 1 und 10. Weiterbildungen finden sich in den abhängigen Ansprüchen.

Dabei ist vorgesehen, dass das Schaltnetzteil ein Startup-Delay aufweist, sodass die Ansteuerung des Schaltelements blockiert ist, bis eine vorgegebene Startverzögerungsdauer abgelaufen ist. Die Startverzögerungsdauer ist dabei länger als die Zeitspanne zur Zwischenkreisladung. Übliche Zwischenkreisladungen dauern in der Regel ca. 3 bis 6 Sekunden. Eine ausreichend lange Startverzögerungsdauer von z.B. 10 Sekunden bewirkt, dass das Schaltnetzteil immer erst dann zu takten beginnt, wenn die Zwischenkreisladung beendet ist oder zumindest soweit fortgeschritten ist, dass ein geringfügiger Spannungseinbruch infolge des Schaltnetzteilstarts nicht als Störfall erkannt wird.

In einer weiteren Ausgestaltung ist vorgesehen, dass das Schaltnetzteil einen Schaltkreis zum Erfassen eines eingangsseitigen Spannungsanstiegs aufweist und dass eine Sperrschaltung vorgesehen ist, um die Ansteuerung des Schaltelements während der Startverzögerungsdauer zu blockieren. Damit ist die gewünschte Funktion einer Startverzögerung des Schaltnetzteils auf einfache Weise umgesetzt.

Von Vorteil ist es, wenn das Schaltnetzteil einen DIP-Schalter zur Aktivierung des Startup-Delay umfasst. Ein derart ausgeführtes Schaltnetzteil ist universell verwendbar. Entsprechend den gegebenen Einsatzbedingungen ist die Startup-Delay-Funktion mittels DIP-Schalter aktivierbar oder deaktivierbar.

Vorteilhaft ist es zudem, wenn die Startverzögerungsdauer mittels Bedienmittel des Schaltnetzteils einstellbar ist. Auf diese Weise ist das Schaltnetzteil auf unterschiedliche Umrichterzwischenkreise anpassbar. Für Umrichter, die eine kürzere Dauer zur Zwischenkreisladung benötigen, wird die Startverzögerungsdauer verkürzt, damit die vom Schaltnetzteil gelieferte Versorgungsspannung schneller zur Verfügung steht.

In einfacher Weise geschieht dies, indem das Schaltnetzteil einen Funktionsschalter zur Einstellung der Startverzögerungsdauer umfasst. In einer einfachen Ausführung ist der DIP-Schalter als Funktionsschalter zur Startverzögerungsdauereinstellung ausgebildet.

Günstigerweise umfasst das Schaltelement auch ein Meldeelement zur Einstellung der Startverzögerungsdauer. Ein Leuchtelement oder ein Tongeber ermöglicht dabei eine einfache Ausgabe der eingestellten Startverzögerungsdauer.

Erfindungsgemäß ist vorgesehen, dass das Schaltnetzteil zur Versorgung einer Steuerung des Umrichters verwendet wird. Im Allgemein ist es von Vorteil, wenn das Schaltnetzteil (9) zur Versorgung des Umrichters und/oder dessen Peripherie verwendet wird.

Ein erfindungsgemäßes Verfahren zum Betreiben eines entsprechenden Schaltnetzteils sieht vor, dass ein Schwellwert einer eingangsseitig am Schaltnetzteil anliegenden Zwischenkreisspannung erkannt wird, dass ab Erreichen des Schwellwerts eine Startverzögerungsdauer beginnt und dass bis zum Ablaufen der Startverzögerungsdauer eine Ansteuerung eines Schaltelements blockiert ist. Das Schaltnetzteil benötigt keine weiteren Signale, um den Ablauf eines Zwischenkreis-Ladevorgangs zu erfassen.

Zur Einstellung einer geänderten Startverzögerungsdauer ist es von Vorteil, wenn mittels eines Funktionsschalters ein Programmiermodus aktiviert wird, während dem ein Meldeelement wiederkehrende Signale zum Anzeigen der einzustellenden Startverzögerungsdauer abgibt und wenn die Startverzögerungsdauer durch nochmalige Betätigung des Funktionsschalters festgelegt wird. Ein solcher Einstellvorgang ist mit einfachen Bedienelementen durchführbar.

Die Erfindung wird nachfolgend in beispielhafter Weise unter Bezugnahme auf die beigefügten Figuren erläutert. Es zeigen in schematischer Darstellung:
- Fig. 1: Blockschaltbild einer Umrichterschaltung
- Fig. 2: Verläufe einer Zwischenkreisspannung

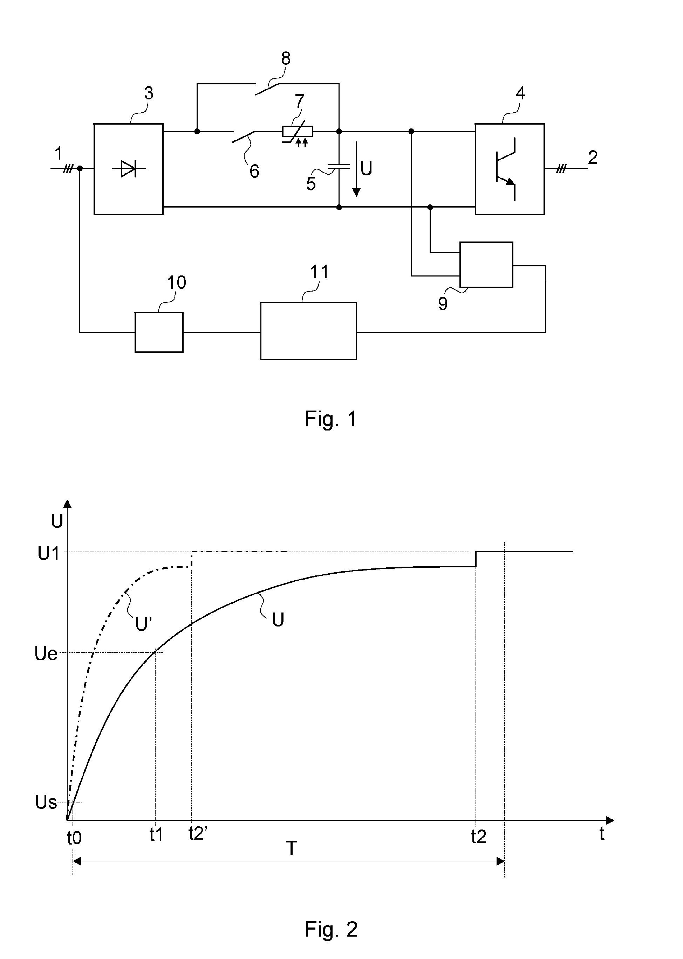

In Fig. 1 ist eine Umrichterschaltung dargestellt. Ein erfindungsgemäßes Schaltnetzteil 9 ist an eine Zwischenkreisspannung U, welche an einem Zwischenkreiskondensator 5 anliegt, angeschlossen. Gespeist wird der Zwischenkreis über eine Gleichrichterschaltung 3, welche an ein dreiphasiges Netz 1 angeschlossen ist. Ein dreiphasiger Ausgangsanschluss 2 zum Anschließen einer Drehstrommaschine ist über eine Brückenschaltung 4 an den Zwischenkreis angeschaltet.

Eine beispielhafte Hochladeschaltung für den Zwischenkreis besteht aus einem Widerstand 7 (z.B. PTC-Widerstand) und einem in Serie geschalteten Hilfsschütz 6. Sobald eine bestimmte Ladung (z.B. 95% der Nenn-Zwischenkreisspannung U1) erreicht ist, werden der Widerstand 7 und das Hilfsschütz 6 mit einem Hauptschütz 8 überbrückt. Als alternative Hochladeschaltungen sind beispielsweise ein Sperrwandler, ein Tiefesetzer oder ein aktiver Gleichrichter zum langsamen Hochtakten einsetzbar.

Üblicherweise wird das Hochladen eines Zwischenkreises mittels einer Überwachungsschaltung überwacht. Sobald eine negative Spannungsänderung (-du/dt) während einer Hochladephase erkannt wird, geht der Umrichter in einen Störungsmodus.

Das Schaltnetzteil 9 dient der Versorgung einer Umrichtersteuerung 11, welche parallel dazu über eine Hauptstromversorgung 10 direkt an das Versorgungsnetz 1 angeschaltet ist. Im Normalbetrieb erfolgt die Versorgung über die Hauptstromversorgung 10. Das am Zwischenkreis angeschlossene Schaltnetzteil 9 übernimmt die Versorgung bei Netzausfällen. Die im Zwischenkreis gespeicherte Energie bestimmt dabei die Dauer eines überbrückbaren Netzausfalls.

Fig. 2 zeigt den Spannungsanstieg einer Zwischenkreisspannung U während einer Hochladephase. Die Spannung U steigt bis zu einem Zeitpunkt t2 an, bei dem z.B. 95% der Nenn-Zwischenkreisspannung U1 erreicht sind. Dann erfolgt eine Überbrückung des Widerstands 7 und des Hilfsschützes 6 mittels des Hauptschützes 8. Ein herkömmliches Schaltnetzteil 9 würde während der Hochladephase zu einem Zeitpunkt t1 aktiv werden, wobei ein Ansprechen der Überwachungsschaltung zu einer Störung führen würde.

Ein erfindungsgemäßes Schaltnetzteil 9 blockiert die Ansteuerung eines im Schaltnetzteil 9 angeordneten Schaltelements so lange, bis der Zwischenkreis aufgeladen ist. Ein durch den Einschaltstrom des Schaltnetzteils 9 hervorgerufener Spannungsabfall wird verzögert, sodass keine Störung des Umrichters auftritt.

Beispielsweise umfasst das Schaltnetzteil 9 einen DIP-Schalter zur Aktivierung dieses erfindungsgemäßen Startup-Delay. Ein solches Schaltnetzteil 9 ist zur Anschaltung an Umrichter-Zwischenkreise und an andere Versorgungsquellen ohne die beschriebene Hochlaufproblematik geeignet.

Bei aktiviertem Startup-Delay beginnt eine voreingestellte Startverzögerungsdauer T (z.B. 10 Sekunden) zu laufen, sobald die Zwischenkreisspannung U bei einem Zeitpunkt t0 einen bestimmten Schwellwert Us erreicht. Dabei ist der Schwellwert Us einerseits kleiner als die Einschaltschwelle Ue zum Zeitpunkt t1, bei welcher das Schaltnetzteil 9 ohne Startup-Delay üblicherweise zu takten beginnen würde. Andererseits wird der Schwellwert Us so groß gewählt, dass ein Hochladen des Zwischenkreises sicher erkannt wird.

Um einem Bedienpersonal die Funktion des Schaltnetzteils 9 anzuzeigen ist es sinnvoll, wenn der Ablauf der Startverzögerungsdauer T signalisiert wird, beispielsweise mittels einer blinkenden Leuchtdiode.

Üblicherweise hängt die Dauer einer Hochladephase von der Umrichtergröße ab. Kleine Umrichter mit relativ wenig Zwischenkreiskapazität 5 erreichen die Nenn-Zwischenkreisspannung U1 bereits früher. Der Anstieg der Zwischenkreisspannung U' verläuft dabei steiler als bei größeren Umrichtern.

Zur Anpassung des Schaltnetzteils 9 an die Hochladedauer verschiedener Umrichter ist die Startverzögerungsdauer T vorteilhafterweise einstellbar. Kleinere Umrichter sind dann früher verfügbar. Ein günstiger Bereich für die Startverzögerungsdauer T liegt zwischen zwei und zehn Sekunden.

Eine Einstellung der Startverzögerungsdauer T erfolgt in einem Programmiermodus. Aktivierbar ist der Programmiermodus beispielsweise, indem ein Funktionsschalter nach dem Hochlaufen der Zwischenkreisspannung innerhalb einer vordefinierten Aktivierungszeitspanne betätigt wird. Dieser Funktionsschalter kann auch der DIP-Schalter zur Aktivierung des Startup-Delay sein. Der Programmiermodus wird dann gestartet, indem der DIP-Schalter nach der Hochlaufphase auf Deaktivierung der Starup-Delay-Funktion umgeschaltet wird. Sobald sich das Gerät im Programmiermodus befindet, zeigt ein Signalisierungselement (z.B. Leuchtelektrode) die einzustellende Startverzögerungsdauer T an. Beispielsweise blinkt eine Leuchtdiode im Sekundentakt. Zur Einstellung einer z.B. sechs Sekunden langen Startverzögerungsdauer T wird ein sechsmaliges Blinken der Leuchtdiode abgewartet, bis eine Betätigung des Funktionsschalters die Startverzögerungsdauer T festlegt. Wird der Funktionsschalter durch den DIP-Schalter gebildet, erfolgt die Festelegung der Startverzögerungsdauer T, indem der DIP-Schalter auf Aktivierung der Starup-Delay-Funktion umgeschaltet wird.

Nach der Einstellung der Startverzögerungsdauer T wird der Programmiermodus automatisch beendet und das Gerät gestartet. Dies kann dem Bedienpersonal zum Beispiel durch schnelles Blinken der Leuchtdiode angezeigt werden. Beim erstmaligen Startvorgang nach einer Änderung der Startverzögerungsdauer T ist es sinnvoll, wenn die neue Startverzögerungsdauer T zur Kontrolle mittels Signalisierungselement angezeigt wird. Beispielsweise blinkt die Leuchtdiode im Sekundentakt entsprechend der Anzahl der eingestellten Sekunden.

Günstigerweise ist der Programmiermodus auch während des laufenden Betriebs des Schaltnetzteils 9 aktivierbar, beispielsweise durch mehrmaliges Umschalten des Funktionsschalters.

## Patentansprüche

1. Schaltnetzteil (9), welches eine Steuerung zur Ansteuerung eines Schaltelements umfasst und an einen Zwischenkreis eines Umrichters angeschlossen ist, **dadurch gekennzeichnet, dass** das Schaltnetzteil (9) ein Startup-Delay aufweist, sodass die Ansteuerung des Schaltelements blockiert ist, bis eine vorgegebene Startverzögerungsdauer (T) abgelaufen ist.

2. Schaltnetzteil (9) nach Anspruch 1, **dadurch gekennzeichnet, dass** das Schaltnetzteil (9) einen Schaltkreis zum Erfassen eines eingangsseitigen Spannungsanstiegs aufweist und dass eine Sperrschaltung vorgesehen ist, um die Ansteuerung des Schaltelements während der Startverzögerungsdauer (T) zu blockieren.

3. Schaltnetzteil (9) nach Anspruch 1 oder 2, **dadurch gekennzeichnet, dass** das Schaltnetzteil (9) einen DIP-Schalter zur Aktivierung des Startup-Delay umfasst.

4. Schaltnetzteil (9) nach einem der Ansprüche 1 bis 3, **dadurch gekennzeichnet, dass** das die Startverzögerungsdauer (T) mittels Bedienmittel des Schaltnetzteils (9) einstellbar ist.

5. Schaltnetzteil (9) nach Anspruch 4, **dadurch gekennzeichnet, dass** das Schaltnetzteil (9) einen Funktionsschalter zur Einstellung der Startverzögerungsdauer (T) umfasst.

6. Schaltnetzteil (9) nach Anspruch 5, **dadurch gekennzeichnet, dass** das der DIP-Schalter als Funktionsschalter zur Einstellung der Startverzögerungsdauer (T) ausgebildet ist.

7. Schaltnetzteil (9) nach einem der Ansprüche 4 bis 6, **dadurch gekennzeichnet, dass** das Schaltnetzteil (9) ein Meldeelement zur Einstellung der Startverzögerungsdauer (T) umfasst.

8. Schaltnetzteil (9) nach einem der Ansprüche 1 bis 7, **dadurch gekennzeichnet, dass** das Schaltnetzteil (9) zur Versorgung einer Steuerung (11) des Umrichters verwendet wird.

9. Schaltnetzteil (9) nach einem der Ansprüche 1 bis 7, **dadurch gekennzeichnet, dass** das Schaltnetzteil (9) zur Versorgung des Umrichters und/oder dessen Peripherie verwendet wird.

10. Verfahren zum Betreiben eines Schaltnetzteils (9) nach einem der Ansprüche 1 bis 9, **dadurch gekennzeichnet, dass** ein Schwellwert (Us) einer eingangsseitig am Schaltnetzteil anliegenden Zwischenkreisspannung (U, U') erkannt wird, dass ab Erreichen des Schwellwerts (Us) eine Startverzögerungsdauer (T) beginnt und dass bis zum Ablaufen der Startverzögerungsdauer (T) eine Ansteuerung eines Schaltelements blockiert ist.

11. Verfahren nach Anspruch 10, **dadurch gekennzeichnet, dass** mittels eines Funktionsschalters ein Programmiermodus aktiviert wird, während dem ein Meldeelement wiederkehrende Signale zum Anzeigen der einzustellenden Startverzögerungsdauer (T) abgibt und wobei die Startverzögerungsdauer (T) durch nochmalige Betätigung des Funktionsschalters festgelegt wird.
